# EUROPEAN PATENT APPLICATION

(11) **EP 2 200 235 A1**
(43) Date of publication of application: **23.06.2010**
(21) Application number: 08171924.7
(22) Date of filing: 17.12.2008
(51) Int. Cl.: H04L 12/58

(54) **System and method of providing discreet comments in a message**

(71) Applicant: Research In Motion Limited, Waterloo, Ontario N2L 3W8 (CA)
(72) Inventor: Wolfe, Glenda c/o Research In Motion Corporation, Building 6, Irving, TX Texas 75039 (US); Vuong, Thanh Vinh, Waterloo, N2L 3L3 (US)
(74) Representative: MERH-IP Matias Erny Reichl Hoffmann

(57) **Abstract**

This disclosure provides a technique for allowing the sender of an electronic message to create a discreet comment electronic message to at least one discreet recipient. The discreet recipient may be a blind copy recipient. The discreet message consists of a discreet comment section specifically address to one or more designated recipients. To create a discreet comment message, a sender would select a discreet recipient. A discreet comment is then inserted. An association is made to link the discreet recipient with a designated discreet comment. The discreet comment is appended to the electronic message upon sending.

## Description

The present disclosure relates generally to the field of data communication and in particular, electronic message communications.

Personal computers and mobile devices, such as cell phones, personal digital assistants (PDAs) and smart phones are commonly used for data communication. Electronic messages on these devices have become a ubiquitous form of data communication. On a daily basis, millions of electronic messages (e-mails), instant messages (IM), secure messages (SMS) and mobile messages (MMS) are sent from senders to recipients worldwide.

One useful feature of e-mail communication is the functionality of blind carbon copy (Bcc). When a sender sends a message to a recipient, he / she can select in the header of the message, the choice of either sending it directly to the recipient (i.e., by entering the name in the "To" field), carbon copying (Cc) the recipient (i.e., by entering the name in the "Cc" field) or blind carbon copying (Bcc) the recipient (i.e., by entering the name in the "Bcc" field).

The Bcc feature enables a sender to designate a recipient (i.e., a Bcc recipient) without having the other recipients (i.e., names entered in the "To" or "Cc" fields) knowing about it. For example, if one wishes to send a message to "John Doe" and "Jane Doe", but would like to send a copy to "Mary Smith" without the other two recipients knowing about it, one may place "John Doe" and "Jane Doe" as the contact in the "To" or "Cc" field. Further, one may select "Mary Smith" in the "Bcc" field. Once the message arrives at the three recipients' mailboxes, they will see that only "John Doe" and "Jane Doe" appear in the header recipient fields. The message intended for "Mary Smith," who is a BCC recipient, is sent to her, but her name does not appear in the header recipient fields.

### GENERAL

The blind carbon copy (Bcc) feature in data communication can be useful for secretly informing Bcc recipients about a message without letting other recipients know about these additional recipient(s). Bcc may also provide for sending batch messages to all recipients (i.e., all recipients are Bcc recipients) without disclosing the identity of the recipients. Despite these advantages, the Bcc feature can be limited in the ability to provide specific private comments to specific individuals on the Bcc recipient list without broadcasting the comment to the entire list. The Bcc feature would be further enhanced if certain other improvements are made to it allowing it to be used both on personal computers and mobile devices.

The disclosure herein presents systems and methods that may create a discreet comment electronic message. In an embodiment, a sender can select at least one discreet recipient. The discreet recipient may be a selected recipient. A discreet comment may then be created. Before the message is sent to the recipients, an association may be made to link the selected recipient with a designated discreet comment. Upon sending, the discreet comment may be appended to the electronic message.

### BRIEF DESCRIPTION OF THE DRAWINGS

For a better understanding of the disclosure and to show more clearly how it may be carried into effect, exemplary embodiments of the disclosure will now be described, by way of example only, with reference to the attached figures, wherein:
FIG. 1 shows in a block diagram of a wireless data communication system;
FIG. 2 shows in a block diagram a wireless communication device used in the wireless data communication system of FIG. 1;
FIG. 3A illustrates in a screenshot showing an exemplary embodiment of a draft email message with a discreet recipient;
FIG. 3B illustrates in a screenshot showing an exemplary embodiment of a received email message by a discreet recipient;
FIG. 4A illustrates in a screenshot an exemplary embodiment of a discreet comment message;
FIG. 4B illustrates in a screenshot an exemplary embodiment of a discreet comment message with multiple discreet comments;
FIG. 4C illustrates in a screenshot an exemplary embodiment of a comment recipient association screen;
FIG. 5A illustrates in a screenshot an exemplary embodiment of a received discreet comment message by a discreet recipient;
FIG. 5B illustrates in a screenshot an exemplary embodiment of a received discreet comment message by a discreet recipient on a mobile device;
FIG. 6 shows in a block diagram an exemplary embodiment of components of a system to create a discreet comment message;
FIG. 7 shows in a block diagram an exemplary embodiment of a process for composing and sending a discreet comment message;
FIG. 8 shows in a block diagram an exemplary embodiment of a process for receiving a discreet comment message; and
FIG. 9 shows in a block diagram an exemplary embodiment of a discreet comment electronic message system.

Like reference numerals are used throughout the figures to denote similar elements and features.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details may be set forth in order to provide a thorough understanding of the teachings of the disclosure. However, it will be understood by those of ordinary skill in the art that the teachings of this disclosure may be practiced without these specific details. In other instances, well-known methods, procedures and components have not been described in detail so as not to obscure the specific details of this disclosure.

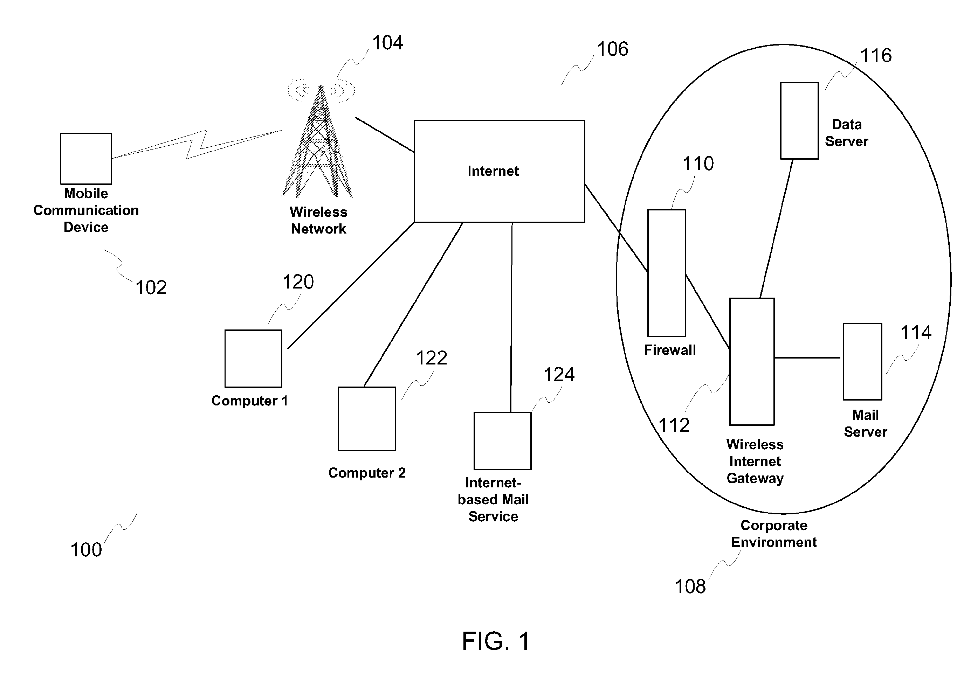

Referring now to FIG. 1, shown therein is a block diagram of a data communication system 100 that exemplifies mobile data communication. The data communication system 100 includes a plurality of mobile devices 102, only one of which is shown for simplicity, that communicate wirelessly with a wireless network 104. The wireless network 104 may include a plurality of network base stations, network nodes or connecting communication nodes, necessary for mobile data communication. The wireless network 104 can be considered to be a wide area network (WAN) and may operate in accordance with any suitable network communication protocol such as Personal Communication Systems (PCS), Global System for Mobile Communication (GSM), General Packet Radio Services (GPRS), Code Division Multiple Access (CDMA), Enhanced Data-rates for Global Evolution (EDGE), Universal Mobile Telecommunications Systems (UMTS), Mobitex^{™} or DataTAC^{™} network communication systems.

The wireless network 104 may be connected to the Internet 106 through an IP-based connection. Data from the mobile device 102 is sent wirelessly to the wireless network 104, and possibly across the Internet 106 to a corporate environment 108. Data entering the enterprise will transmit through a secure port on a firewall 110 to a wireless Internet gateway 112.

The wireless Internet gateway 112 acts as a proxy and intelligently routes data to the correct destination server. In the exemplary system 100, the wireless Internet gateway 112 may connect to a mail server 114, and a data server 116. Mail server 114 may be a Microsoft Exchange^{™} server, Lotus Domino^{™} server or Novell Groupwise^{™} server, or other mail server installed in a corporate environment. Data server 116 encompasses any other server that stores information that is relevant to the corporation. The data server may include, but is not limited to, databases, online data document repositories, customer relationship management (CRM) systems, or enterprise resource planning (ERP) applications.

Data communication system 100 further exemplifies data communication connecting multiple computers 120, 122 to the Internet 106. These computers may communicate via corporate mail server 114 or subscribe to an Internet-based mail service 124. Examples of Internet-based mail services 124 include Yahoo Mail^{™}, Google GMail^{™}, Microsoft Live^{™}, or other Internet service provider-based mail systems.

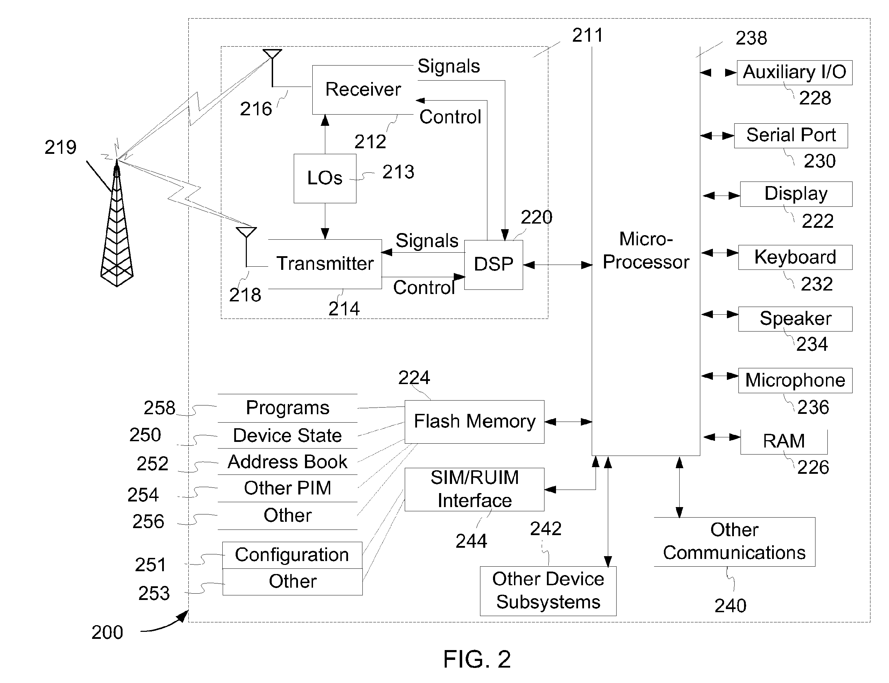

Referring now to FIG. 2, shown therein is a block diagram of a mobile electronic device 200 that can be used in the wireless data communication system 100. The mobile electronic device 200 is preferably a two-way wireless electronic communication device having at least voice and data communication capabilities. The mobile electronic device 200 may have the capability to communicate with other computer systems on the Internet. Depending on the exact functionality provided, the mobile communication device 200 may be a data messaging device, a two-way pager, a wireless e-mail device, a cellular telephone with data messaging capabilities, a wireless Internet appliance, or a data communication device, for example.

Mobile electronic device 200 includes a communication subsystem 211, having both a receiver 212 and a transmitter 214, as well as associated components such as one or more, preferably embedded or internal, antenna elements 216 and 218, local oscillators (LOs) 213, and a processing module such as a digital signal processor (DSP) 220. The particular design of the communication subsystem 211 is dependent upon the communication network in which mobile electronic device 200 is intended to operate.

Mobile electronic device 200 preferably includes a microprocessor 238 that controls the overall operation of the device. Communication functions, including at least data and voice communications, are performed through the communication subsystem 211. The microprocessor 238 also interacts with other device subsystems such as a display 222, flash memory 224, random access memory (RAM) 226, auxiliary input/output (I/O) subsystems 228, a serial port 230, a keyboard 232, a speaker 234, a microphone 236, a short-range communications subsystem 240 and any other device subsystems generally designated as 242. Auxiliary input/output subsystems 228 may include such input means as a thumbwheel, a scrollwheel, a rollerball, a trackball, and / or a touchpad or touchscreen.

Mobile electronic device 200 may also include an SIM/RUIM interface 244 for performing network registration and appropriate activation procedures. Access to the wireless network 104 is associated with a subscriber or user of the mobile electronic device 200. To identify a subscriber, the device 200 requires a Subscriber Identity Module or "SIM" card or an RUIM (Removable User Identity Module) (both not shown) to be inserted in the SIM/RUIM interface 244 in order to communicate with the network 104. The SIM card or RUIM is one type of a conventional "smart card" that may be used to identify a subscriber of the mobile electronic device 200 and to personalize the mobile electronic device 200, among other things. Alternatively, user identification information can also be programmed into the flash memory 224. Services may include: web browsing and messaging such as email, voice mail, Short Message Service (SMS), and Multimedia Messaging Services (MMS). More advanced services may include: point of sale, field service and sales force automation.

The microprocessor 238, in addition to its operating system functions, enables execution of programs 258 on the mobile electronic device 200. The programs 258, which control basic device operations, including data and voice communication applications, are normally installed on the mobile electronic device 200 during its manufacture.

Mobile electronic device 200 further includes a device state module 250, an address book 252, a personal information manager (PIM) 254, and other modules indicated as other 256. The PIM has functionality to organize and manage data items of interest to a subscriber, such as, but not limited to, e-mail, calendar events, voice mails, appointments, and task items. A PIM application has the ability to send and receive data items via the wireless network 104. Furthermore, mobile electronic device 200 may further include a configuration module 251 and other modules 253 that are used in conjunction with the SIM/RUIM interface 244.

As illustrated in FIG 1, mobile device 102 may utilize an attachment service offered through attachment server 116. In the aforementioned example, e-mail messages with attachments will be sent from mobile device 102, across wireless network 104 to attachment server 116 where it will be converted into an optimal format and sent back to mobile device 102 and rendered viewable on the device thereof.

The insertion of user preference can be accomplished by using either manual or automatic markers. The marker will be sent from mobile device 102 to the attachment service and indicate instructions on the section to return for conversion. Automatic markers may be embedded in the text of an e-mail message, whereas manual markers would require manual insertion into document. Both automatic and manual markers create bookmarks in the attachment viewer application on mobile device 102 where the resultant data is displayed.

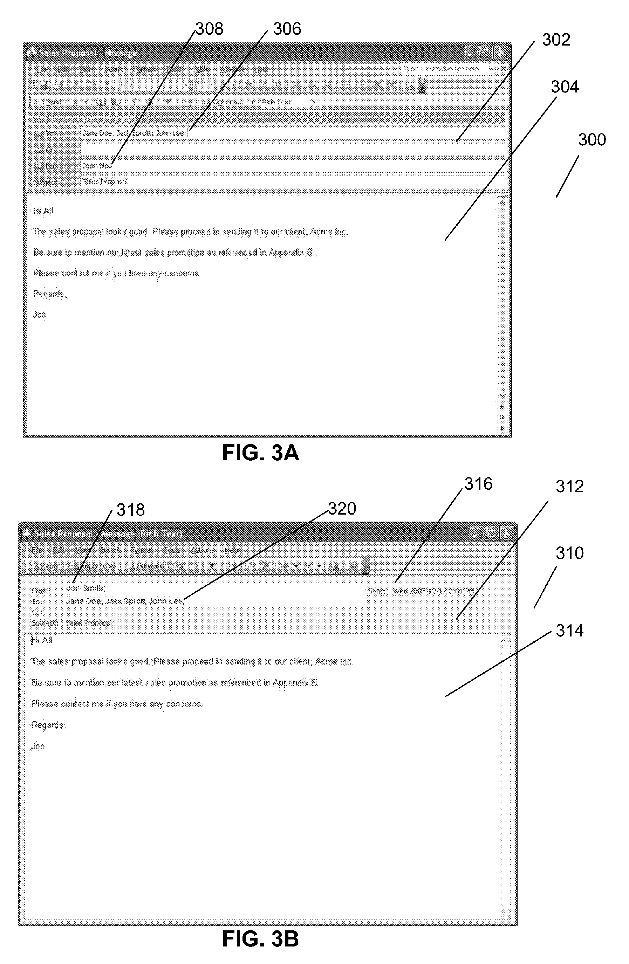

Referring now to FIG. 3A, shown therein is a screenshot of an exemplary embodiment of a draft email message with a Bcc recipient (or discreet recipient). Email message 300 is a typical message that a sender would draft. Email message 300 includes a header 302 and body 304. Body 304 contains the content of the message, which is accessible and viewable by all recipients. Header 302 includes a subject field and several recipients fields, including a "To" field 306, a "Cc" field and a "Bcc" field 308. In this exemplary embodiment, "To" field 306 has been populated with recipients "Jane Doe", "Jack Sprott" and "John Lee". Further, "Bcc" field 308 has been populated with recipient "Jean Nee".

Referring now to FIG. 3B, shown therein, is a screenshot of an exemplary embodiment of a received email message by the Bcc recipient (or discreet recipient). Received message 310 also includes a header 312 and body 314. Header 312 includes subject field, a "Sent" field 316 and several recipient fields, including a "From" field 318, a "To" field 320, and a "Cc" field. The "Sent" field 316 is a time and date indicator of when the message was sent.

Received message 310 shows that the sender in the "From" field 306 is "Jon Smith". The recipients in the "To" field are "Jane Doe", "Jack Sprott" and "John Lee". The recipient in the "Bcc" field 308 (i.e., Jean Nee) is not displayed. All recipients will be forwarded a copy of received message 310. None of the senders in the "To" field 320 will know that the Bcc recipient (Jean Nee) has received a copy of this message.

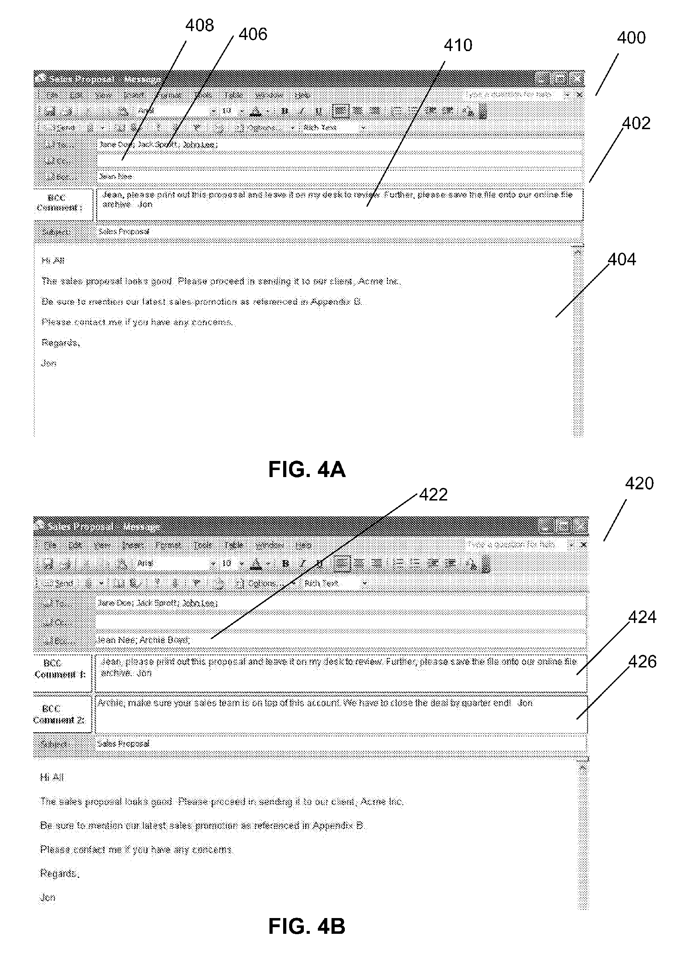

Referring now to FIG. 4A, shown therein is a screenshot of a discreet comment message in accordance with the disclosure. Discreet comment message 400 also includes a header 402 and a body 404. Body 404 contains the content of the message. In addition to the typical header fields included in a header of a message, as outlined in FIG. 3A and 3B, header 402 also includes a "Bcc Comment" field 410.

In this exemplary embodiment, header 402 includes a subject field, a "To" field 406, a "Cc" field and a "Bcc" field 408. "To" field 406 has been populated with recipients "Jane Doe", "Jack Sprott" and "John Lee". Further, "Bcc" field 408 has been populated with recipient "Jean Nee". The discreet comment field 410 stores a private message that the sender wishes to address only to the Bcc or discreet recipient. Preferably, only recipients in the "Bcc" field will receive this message. In this embodiment, the sender (Jon) wishes to address his administrator (Jean Nee) to print out a proposal and save it onto the file archive.

An alternate embodiment of discreet comment message can be shown in FIG. 4B. In this embodiment, unique discreet comments can be created for multiple discreet recipients. Multiple comment message 420 contains two discreet recipients in "Bcc" field 422 (i.e., "Jean Nee" and "Archie Boyd"). First discreet comment field 424 contains a first private message for the first discreet recipient ("Jean Nee") and the second discreet comment field 426 contains a second private message for the second discreet recipient ("Archie Boyd").

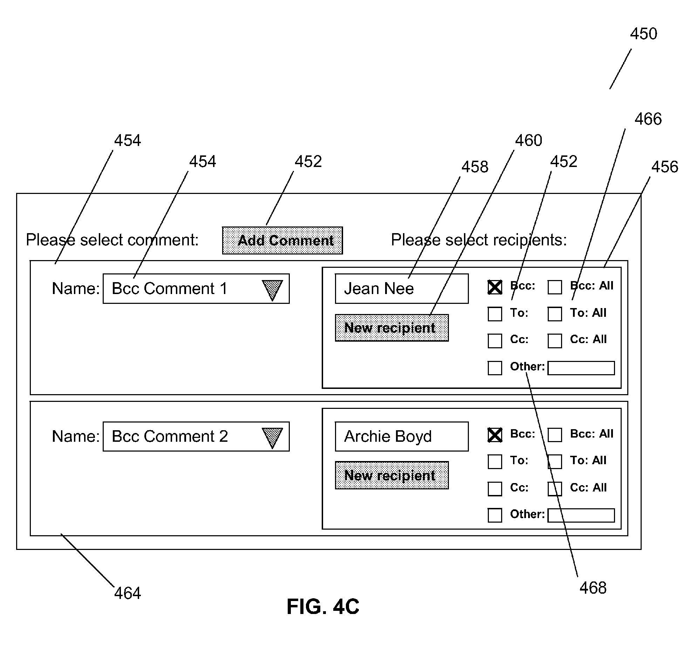

Upon completing discreet comment fields 424 and 426, the user is prompted to associate discreet recipients from Bcc field 422 to each comment fields 424 and 426. FIG. 4C, shown therein, is an exemplary screenshot of discreet comment and recipient association screen. Association screen 450 comprises of an "Add Comment" button 452 and discreet comment rows 454 and 464 for associating each discreet comment with at least one recipient. Note that the recipient can be selected from the "To:", "Cc:", and / or "Bcc" recipient fields. Selecting and associating the recipient with a discreet comment would designate the recipient as a discreet recipient.

Association screen 450 is initially populated with a discreet comment row (454); however, upon selecting the "Add Comment" button 452, an additional row is appended (464). Discreet comment row 454 contains all the relevant info required to associate a discreet comment (410, 424 or 426) with a discreet recipient (408 or 422). Discreet comment row 454 comprises a comment selection field 454 and recipient section 456. Comment selection field 454 is preferably a drop down list that enables the user to select a discreet comment from a list of previously entered distinct comment records. In addition to a list, the user may manually enter an entry in comment selection field 454.

Recipient section 456 provides multiple options for the user to select one or more recipients. The user can select from a pre-populated recipient list 458. List 458 may display all recipients, including names in the "To:", "Cc" and "Bcc" fields. However, list 458 would preferably be defaulted to show discreet recipients (i.e., Bcc recipients). When a recipient is selected (e.g., "Jean Nee"), the status of that recipient would be indicated by shaded recipient selection box 452. In this example, since "Jean Nee" is selected, the "Bcc" box would be shaded. If a recipient is not found in any of the recipient fields, the user would have the choice of selecting the "Other" field 468 and manually enter a recipient name.

In recipient section 456, the user is also given the option to send the comment to all recipients in either the "Bcc:", "To:" or "Cc:" fields by selecting one or more all recipient selection boxes 466. For example, if the user intends to send to all "Bcc" recipients, he would choose the box "Bcc All" option. Upon this selection, recipient list 458 would be populated with all Bcc recipients. Recipient section 456 also includes a "New recipient" button 460 where the user can insert an additional recipient. Upon selection this button, a new recipient list field 458 would appear (not shown).

In the aforementioned embodiment, association screen 450 appears after all discreet comments have been created. However, in other embodiments, association screen 450 may appear before or after the creation of each discreet comment and / or before sending the message.

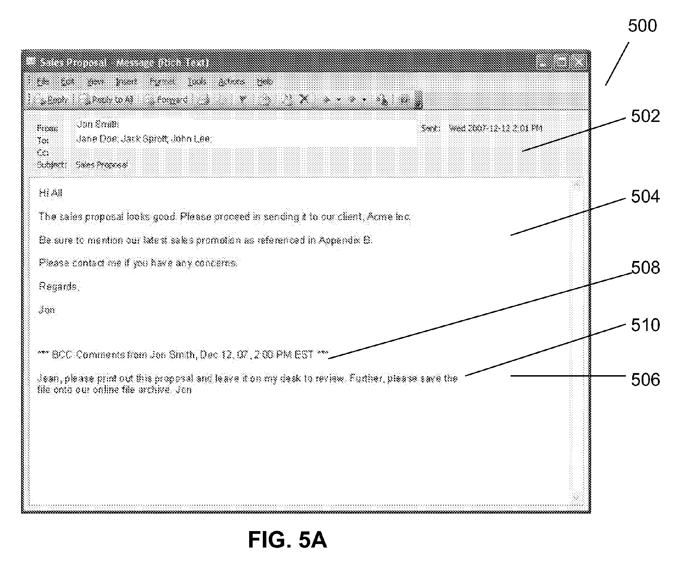

Referring now to FIG. 5A, shown therein, is a screenshot of a discreet received message received by a discreet recipient. Received message 500 includes header 502 and body 504. Header 504 stores header information as outlined in FIG. 3A. Body 504 contains the content of the message and a separate discreet comment section 506. Discreet comment section 506 can be appended anywhere in body 504, but is preferably found at the beginning or end of body 504. In this exemplary embodiment, discreet comment section 506 is found at the end of body 504.

Discreet comment section 506 comprises a discreet comment header 508 and discreet comment text 510. Discreet comment text 510 is the actual discreet comment message 410 that sender 318 wishes Bcc recipient 308 to see. The discreet comment header 508 contains relevant information that identifies that this section is a discreet Comment. For example, such information as sender name, time and date stamp, time zone, and divider graphics or icons (e.g., "***") may be used to differentiate the discreet comment section 506 from message body 504.

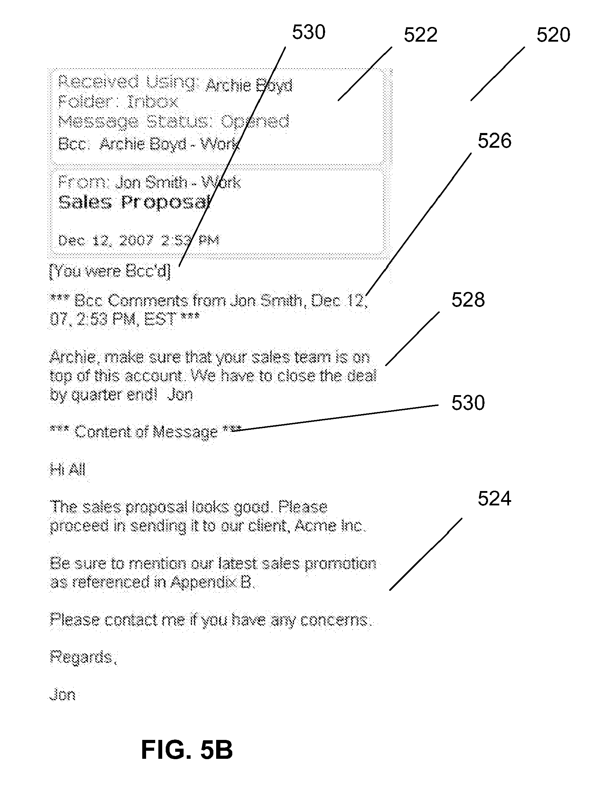

FIG. 5B is a screenshot of a received message on mobile device 102. In this embodiment, mobile received message 520 includes a header 522 and a body 524 of the message. In header 522, it can be seen that sender (Jon Smith) has sent a message to Bcc recipient Archie Boyd.

Body 524 contains the content of the message and a separate discreet comment section. Discreet comment section further comprises a discreet comment header 526 and discreet comment text 528. In this embodiment, discreet comment section is appended before the text of the message in body 524.

Mobile received message 520 can be displayed on mobile device 102 using different graphical user interface (GUI) representations. For example, messages can be displayed in text format, rich text format, HTML, using colours, and / or include embedded images and audio files. In this embodiment, mobile received message 520 depicts that the sender's email address as Jon Smith's work email. Further, received message 520 also has a Bcc indicator 530 to inform the user that they were Bcc'ed on this message. In this embodiment, a message divider indicator 530 is also present to explicitly separate the discreet comment section from message body 524.

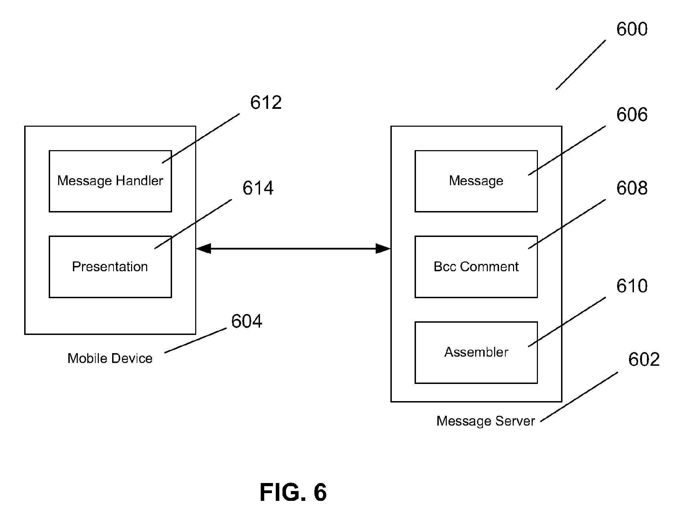

FIG. 6 shows a block diagram illustrating an exemplary embodiment of components of a system to create a discreet message. Communication system 600 consists of message server 602 and mobile device 604 which are in two way communication with each other. Message server 600 is synonymous with mail server 114 and/or internet based mail service 124 in FIG. 1. In addition to being an e-mail server, message server 600 can also be an instant message server, a wireless messaging server, a multi-media server, or a SMS / MMS server. Further, mobile device 604 is synonymous with mobile device 102 or 200.

Message server 602 consists of separate modules to create and store discreet messages. When composing a message, the data message is stored in message module 606. The discreet comment itself is stored in discreet comment module 608. Once a message is completed, assembler module 610 compiles the separate components of the message to create a complete message to be sent off to the recipient(s) by message server 602. Assembler module 610 is responsible for linking separate discreet recipient(s) to separate discreet comments, as illustrated in FIG. 4B. As illustrated in FIG. 5A, to create a discreet message, assembler module 610 inserts the discreet comment section 506 either at the beginning or end of the body of a message. In further embodiments, assembler module 610 may also be used to manage bcc Comment message threads where new discreet comments from new incoming messages are appended to an existing message threads. Assembler 610 may recognize messages with previous discreet comment threads and manages the display of these threads accordingly at mobile device 604.

If the discreet message is sent to a mobile device 604, separate software modules 256 on the device such as message handler module 612 and presentation module 614 are called upon to manage the discreet message. Message handler module 612 stores the discreet message in memory 224. Presentation module 614 is responsible for formatting the message to be displayed on the display 222 of the mobile device. Presentation module 614 is in charge of rendering an elegant, viewable message and may be in charge of rendering various fonts, font sizes, colours and / or file formats (e.g., text, rich text, HTML, etc).

One feature with e-mail messaging is that the recipient can forward the received message to any other recipients. If the received message has a discreet comment, it would consequently also be forwarded to the new recipient. However, this dilemma may be resolved by installing discreet comment software at either the sender or recipient message server. This software validates the discreet recipients and will only send messages with discreet comments to authorized discreet recipients (i.e., users that also have discreet comment software). If an unauthorized recipient is detected, the discreet comment software will reject sending the discreet message to that recipient. Further, if the sender message server has the necessary software, but the recipient does not, the sender software may generate a warning alerting the sender of the inherent risk of sending it to the recipient and inherent risk of forwarding the message to others.

In a further embodiment, message server 602 also includes an authorization module (not shown) that provides permission for certain individuals access to certain or all discreet comments regardless of whether they are a discreet recipient. For example, authorization module may allow a director or team lead recipient in the message to see all comments made on that message by their underlying team members. Separate authorization policies may be required to be configured for this functionality.

In yet a further embodiment, message server 602 also includes an authentication module (not shown) that requests that the recipient enter a security password in order to download and / or view discreet comments. For example, a Bcc message would be sent to a Bcc recipient. The Bcc recipient would be prompted to enter a security password. Upon authentication, the Bcc comment component of the message would then be made viewable to the user on either their computer or mobile device.

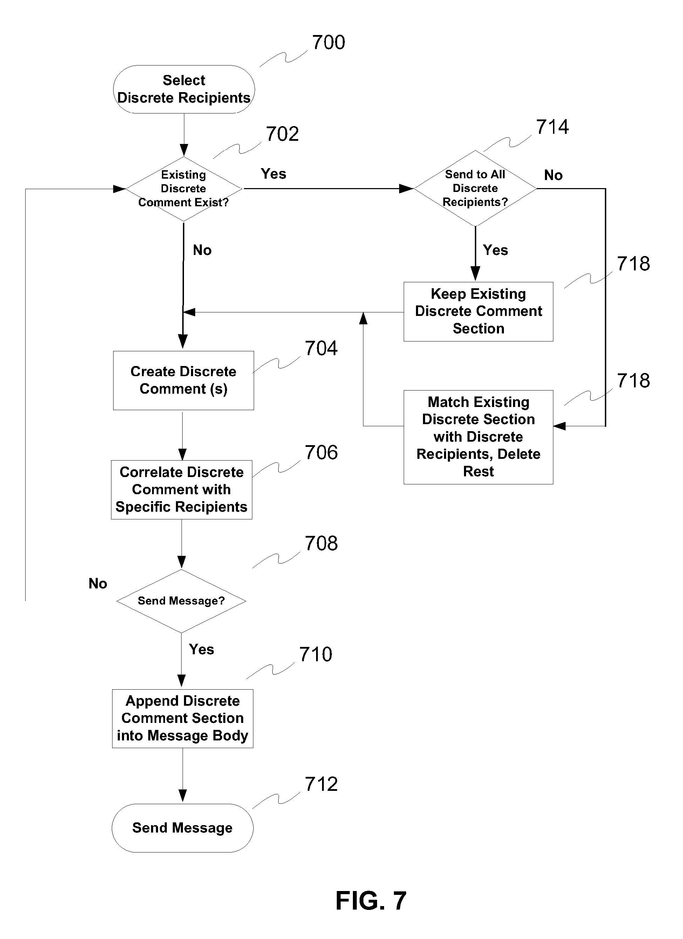

Referring now to FIG. 7, shown therein is a process of composing and sending a discreet message. This process begins with selecting discreet or Bcc Recipients at block 700. Bcc or discreet recipients can be selected from a corporate or personal address book, contact list or the corporation's Global Address Lookup (Gal) list. Further, if the discreet recipient is not in a known list, the sender can manually type in a user contact (e.g., email address) in the Bcc field.

Next, the system checks to see whether an existing discreet comment exists at block 702. If there is no discreet comment (i.e., no comment exists), a discreet comment section is created at block 704. If there are multiple discreet recipients, the system correlates the different discreet comments with specific discreet recipients at block 706. If there is only a single discreet recipient, block 706 may be omitted.

Once the message is completed, the user decides whether to send the message at block 708. If the user wishes to send the message, the system then appends the discreet comment section(s) into body of the message at block 710. Thereafter, the message is sent at block 712. If the user is not quite done with composing the message (i.e., more discreet comments to add), the process loops back to block 702 for further additions.

If an existing discreet comment exists at block 702, the system then determines whether the discreet comment is to be sent to all discreet recipients at block 714. If it is, the existing discreet comment is kept, at block 718, and the process returns to the regular process flow at to block 704 to determine whether additional discreet comments are required to be created. However, if the message is not intended to be sent to all discreet recipients, the system matches existing discreet comments with designated discreet recipients and deletes any outstanding discreet comments at block 718. At block 718, the user may be further prompted to confirm which discreet recipient should be matched with which discreet comment. For example, discreet comment 1 may be associated with Bcc recipients 1 and 3, and discreet comment 2 may be associated with Bcc recipient 2 and 4. At this point, the process flow also returns to block 704.

In alternate embodiments of process 700, the user may choose to create discreet comment (block 704) by selecting an "Add Bcc Comment" menu item or by selecting a designated icon. For instance, in the "Tools" menu of the email program, there could be a selection to "Add Bcc Comment" which could generate the Bcc field and then prompt the user to select a recipient(s) from the available recipients for the comment. Additionally, this block could be performed again for a separate Bcc Comment to different recipients.

In further embodiments of process 700, discreet recipients may also be extracted from other application. For example, a user may select an email address, a SMS contact and an instant message contact. The system can keep track of the delivery mechanism (i.e., email, SMS and instant message) of each of these contacts and associate them with the appropriate discreet comment.

In yet a further embodiment (not shown), the aforementioned process for sending discreet comments in electronic messages, as outlined in Figure 7, can further be generalized as follows: the first step involves receiving a first electronic message. The second step involves receiving a plurality of recipient inputs associated with the first electronic message. Thirdly, one or more discreet comments are then received by the sender. Thereafter, a second electronic message is created using the first electronic message the discreet comment input(s). A discreet recipient input is then received by the sender. Once all these steps have been taken, the second electronic message is sent to the designated recipient. Finally, the first electronic message is sent to all recipients designated by the plurality of recipients inputs.

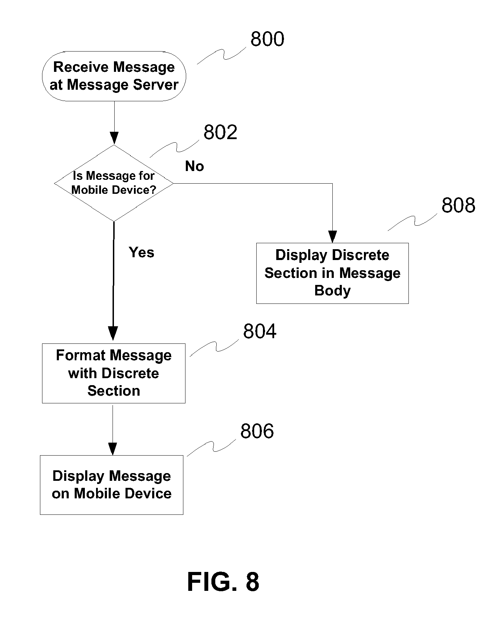

Referring now to FIG. 8, shown therein is a process for receiving a discreet message. This process starts with receiving a discreet message at a message server at block 800. Message server at block 800 may be synonymous with message server 602 or mail servers 114 and 124.

Next, the system determines whether the discreet message is destined for a mobile device at block 802. If it is, the message is formatted for display on mobile device with Bcc section at block 804. The message is then displayed on the mobile device at block 806. If the message is not forwarded to a mobile device, it is hypothesized to be handled by the recipient mail server where the discreet comment section of the message is displayed in the message body at block 808.

While displaying the discreet comment message on either the message body or mobile device (block 806 or 808), the discreet comment section may initially be hidden, but may be associated with a discreet comment indicator such as an icon, menu item, Tooltip^{™}, text, etc. Upon selection of the indicator, the discreet comment section would be viewable on the display.

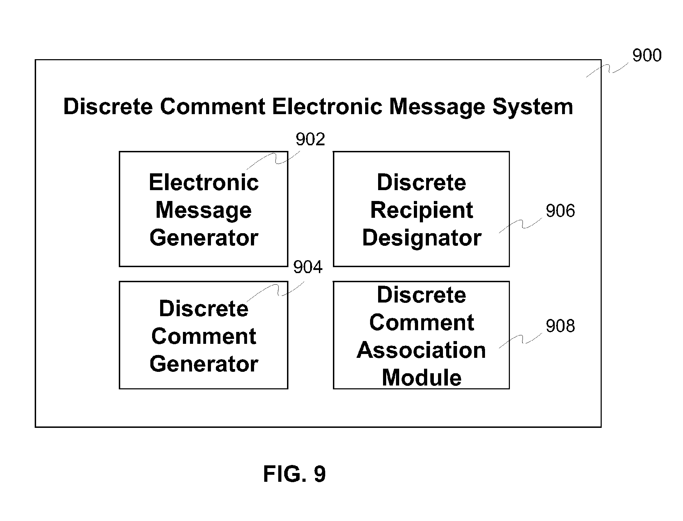

Referring now to FIG. 9, shown therein is a discreet comment electronic message system. Discreet comment electronic message system 900 is an exemplary system to enable discreet communication. System 900 comprises of hardware and software components such as computer servers and mobile devices, as well as software applications and modules running on these hardware components.

System 900 consists of several components including an electronic message generator 902, a discreet comment generator 904, a discreet recipient designator 906 and a discreet comment association module 908. Electronic message generator 902 is responsible for creating the electronic message. Discreet comment generator 904 is responsible for creating the discreet comments. Discreet recipient designator 906 is a module in charge of designating a recipient of the electronic message as a discreet recipient. Finally, discreet comment association module 908 is in charge of linking one or more discreet comments that is generated by discreet comment generator 904 to one or more discreet recipients. Once the entire message is complete, electronic message generator 902 will consolidate all these components to complete creating the electronic message to be sent to the designated recipient.

In addition to supporting e-mail messages, discreet messages can also be configured to support other forms of data communication such as instant messages, SMS / MMS messages, private messages, private conversations in a Webex or conference call, blogging, word processor editing, and the like.

In yet a further embodiment, the discreet commenting feature may also be extended to enable regular recipients (i.e., names in "To" and "Cc" fields) to receive comments in a message. These comment fields may also be setup to provide commenting functions for individual users (i.e., keeping track of one to one comment threads) or group of users (i.e., keeping track of one to many comment threads).

The above-described exemplary embodiments of the disclosure are intended to be examples only. Those of skill in the art may effect alterations, modifications and variations to the particular embodiments without departing from the scope of the disclosure. Other aspects and features of the disclosure will become apparent to those ordinarily skilled in the art upon review of the following description of exemplary embodiments of the disclosure in conjunction with the accompanying figures.

## Claims

1. A method of sending discreet comments in electronic messages, the method comprising:
receiving a first electronic message;
receiving a plurality of recipient inputs associated with said first electronic message;
receiving a discreet comment;
generating a second electronic message using said first electronic message and said discreet comment input;
receiving a discreet recipient input;
sending said second electronic message to a designated recipient; and
sending said first electronic message to all recipients designated by said plurality of recipients inputs.

2. The method of claim 1 wherein said discreet comment is located in a text body of said first electronic message.

3. The method of claim 1 or claim 2 wherein a header of said second electronic message comprises said discreet comment.

4. The method of any one of claims 1 to 3 wherein said designated recipient is one said recipients designated by said plurality of recipients inputs.

5. The method of claim 4 wherein said step of sending said first electronic message to all recipients designated by said plurality of recipients inputs is enhanced to refrain from sending an instance of the first electronic message to the designated recipient.

6. The method of any one of the preceding claims wherein said discreet comment is a blind comment field.

7. The method of any one of the preceding claims wherein said discreet comment further comprises information comprising any of: text, sender, time, date, subject, GPS coordinates, identity information, images, web links and blog addresses.

8. The method of any one of the preceding claims wherein said electronic message comprises any of: an e-mail, instant message, SMS message, MMS message, voice mail message, and PIN message.

9. A method of receiving a discreet comment electronic message at a recipient device capable of reviewing discreet comments comprising:
receiving said discreet comment electronic message at a recipient mail server;
selecting a display application on said recipient device;
formatting said message with a discreet comment viewable on said display application; and
displaying said discreet comment electronic message on said recipient device.

10. The method of claim 9 wherein said display application comprises any of: a corporate mail application, an internet-based mail application, an instant message application, and a web browser.

11. A discreet comment electronic message system for discreet comment electronic message communication, the system comprising:
an electronic message generator for generating an electronic message and for receiving recipient inputs;
a discreet comment generator for generating a discreet comment;
a discreet recipient designator for designating a recipient input as a discreet recipient; and
a discreet comment association module for associating the discreet comment with the discreet recipient.

12. The system of claim 11 further comprising a receiving message application on said recipient device for displaying said discreet electronic message.

13. The system of claim 11 or claim 12 wherein said means for generating a discreet comment is a software module adapted to create a discreet comment input in said discreet electronic message.

14. The system of any one of claims 11 to 13 further comprises a validation software module adapted to associate at least one discreet comment input with at least one designated discreet recipient.

15. A memory device storing data comprising a discreet comment electronic message, said discreet comment electronic message comprising:
a message header having at least one recipient;
a message body; and
at least one discreet comment section associated with at least one designated recipient from the at least one recipient.

16. The message of claim 14 wherein said discreet comment is stored in said message header or message body.

## Amended claims

### Amended claims in accordance with Rule 137(2) EPC.

**1.** A method of sending discreet comments (410) in electronic messages (400), the method comprising:
receiving content in a body (404) corresponding to a first electronic message;
receiving a plurality of recipient inputs (406, 408) in a header (402) corresponding to said first electronic message; said recipient inputs (406, 408) associated with said content;
receiving a discreet comment (410) in said header (402);
receiving a discreet recipient input (308) in said header (402);
said discreet recipient input (308) associated with said discreet comment (410);
generating said first electronic message using: said body (404) and said plurality of recipient inputs (406, 408);
generating a second electronic message using: said first electronic message, said discreet comment (410), and said discreet recipient input (308);
sending said first electronic message to all recipients designated by said plurality of recipients inputs (406, 408); and sending said second electronic message to a recipient designated by said discreet recipient input (308).

**2.** The method of claim 1 wherein said receivings are performed at a mobile electronic device (604) and said generatings and sendings are performed at a server (602) connected to said mobile electronic device (604) and configured to receive data from said mobile electronic device (604)..

**3.** The method of any one of the preceding claims wherein said discreet comment (410) is associated with a blind comment field (308).

**4.** The method of any one of the preceding claims wherein said discreet comment (410) further comprises information comprising any of: text, sender, time, date, subject, GPS coordinates, identity information, images, web links and blog addresses.

**5.** The method of any one of the preceding claims wherein said electronic message (400) comprises any of: an e-mail, instant message, SMS message, MMS message, voice mail message, and PIN message.

**6.** A method of receiving a discreet comment electronic message (400) at a recipient device capable of reviewing discreet comments comprising:
receiving said discreet comment electronic message (400) from a recipient mail server (602);
selecting a display application on said recipient device;
formatting said message with a discreet comment identified by a discreet comment header (410) on said display application; and
displaying said discreet comment electronic message (400) on said recipient device.

**7.** The method of claim 6 wherein said display application comprises any of: a corporate mail application, an internet-based mail application, an instant message application, and a web browser.

**8.** A discreet comment electronic message system for discreet comment electronic message (400) communication, the system comprising:
an electronic message generator for:
receiving content in a body (404) corresponding to a first electronic message,
receiving a plurality of recipient inputs (406, 408) associated with said content in a header (402) of said first electronic message,
and generating said first electronic message using: said body (404) and said plurality of recipient inputs (406, 408); a discreet comment generator for receiving a discreet comment (410) in said header (402);
a discreet recipient designator for receiving a discreet recipient input (308) in said header (402) and designating said discreet recipient input (308) as a discreet recipient; and
a discreet comment association module for associating said discreet comment (410) with said discreet recipient,
said discreet comment generator for generating a second electronic message using: said first electronic message, said discreet comment (410), and said discreet recipient.

**9.** The system of claim 8 further comprising a receiving message application on a recipient device for displaying said second electronic message.

**10.** The system of any one of claims 8 to 9 further comprises a validation software module (450) adapted to associate at least one discreet comment input (454) with at least one designated discreet recipient (458).

**11.** A memory device storing data comprising a discreet comment electronic message (400), said discreet comment electronic message (400) comprising:
a message header (402) having at least one recipient;
a message body (404); and
at least one discreet comment section (410) in said message header (402) associated with at least one designated recipient from the at least one recipient.
